# EUROPEAN PATENT APPLICATION

(11) **EP 2 733 916 A1**
(43) Date of publication of application: **21.05.2014**
(21) Application number: 13386030.4
(22) Date of filing: 14.11.2013
(51) Int. Cl.: H04M 1/725, H04M 1/67, H04M 1/663

(54) **Method for restricting calls in a telephone**

(30) Priority: 15.11.2012 GR 20120100577
(71) Applicant: Litsas, Panteleimon, 54631 Thessaloniki (GR)
(72) Inventor: Litsas, Panteleimon, 54631 Thessaloniki (GR)

(57) **Abstract**

The invention concerns a software programme that defines three applications (A-B-C), the incorporation of which into a telephone set (of fixed or mobile telephony) makes it possible for the set in question to implement new operations. Specifically, application A makes it possible to ban certain incoming calls. Application B makes it possible to set time interval within which application A is to be in operation. Application C predetermines outgoing calls to be allowed from the telephone set in question.
Any attempt to use Application C can be blocked through the use of a secret code number to ensure that any third party is excluded from access to the applications.
Application A and C are illustrated in Drawing 1 and explained with references made to Drawing 1.

## Description

The invention concerns software created to be incorporated into a telephone set of mobile or fixed telephony, so as to make it possible for the telephone set to have operational applications that will make its use more effective in answering daily needs. The incorporation of the software into a telephone set will make the use of three (3) applications possible.
Application A: Banning certain telephone numbers; Application B: setting time limits;
Application C: predetermining call numbers.

### APPLICATION A: BANNING CERTAIN TELEPHONE NUMBERS

A1. When using application A, it will be possible for any telephone set to select a telephone number, telephone numbers, a group of telephone numbers, or groups of telephone numbers, which the telephone set is to handle as described below.
A2. The set will receive incoming calls from the preselected telephone numbers (paragraph A1).
A3. The set will not receive incoming calls from the preselected telephone numbers (paragraph A1).
A4. Any attempt for an incoming call from any number that is not the same as the preselected ones will not be accepted by paragraph A2 and will be accepted for paragraph A3.

### APPLICATION B: SETTING TIME LIMITS

B1. When using application B, it will be possible for any telephone set to determine the time intervals (from-to) within which each case of application A will be active.
B2. The time interval (from-to) which are to determine the duration of the operation of APPLICATION A could be defined in all possible combinations of time intervals or/and repeated predetermined time intervals.

### APPLICATION C: PREDETERMINING CALL NUMBERS

C1. When using application C, it will be possible for any telephone set to select a telephone number, telephone numbers, a group of telephone numbers, or groups of telephone numbers, which the telephone set can make outgoing calls to.
C2. Any attempt to make an outgoing call to a telephone number that is not the same as one of the preselected ones (paragraph C1) will be impossible.
C3. Access to application C for selecting telephone numbers (paragraphs C1) will be possible only through the use of a secret code number or any other manner that will secure exclusive use of application C, banning any third party who does not know this secret code number or manner from using the telephone set.

If the new APPLICATIONS (A-B-C) have not been used on a telephone set, it will operate in accordance to the manner it has been programmed to operate.
The software disclosed with its new applications needs to be protected by copyright and included in the claims of the patent.

To date, no telephone set operates with the new applications disclosed in this patent. By using these applications (A-B-C), the telephone set does not allow unwanted incoming phone calls, determines time intervals for the operation of the application and preselects telephone numbers to which outgoing calls are allowed.

One way of effectuating the invention is illustrated in the following example:

A company gives mobile phones to its sales department personnel. These sets will receive calls only from the telephone number used by company customers/clients, Application A, paragraph A2. The same telephone sets will make outgoing calls only to telephone numbers used by company customers/clients, Application C, paragraphs C1, C2.
The telephone numbers in question have been preselected by the company before handing the telephone sets to the salespersons, Application C, paragraphs C1, C3.

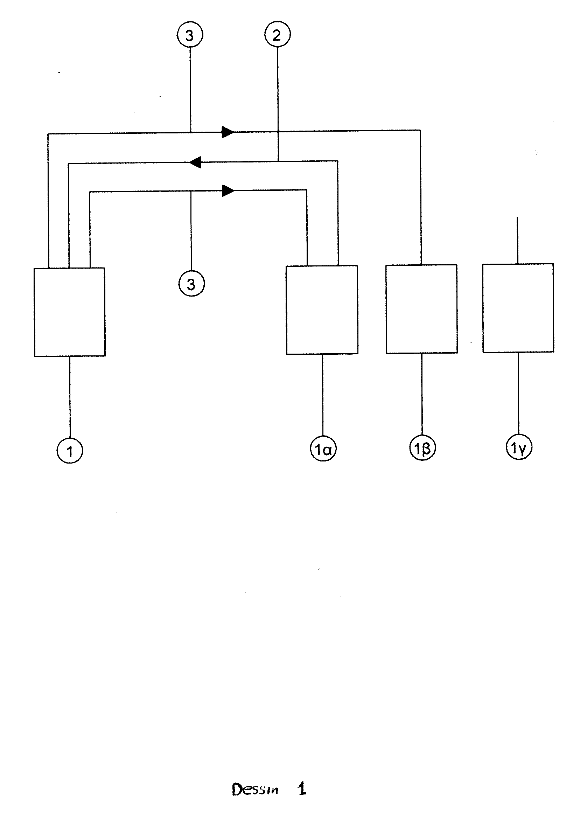

An illustration and explanation of the application operation is presented in Drawing 1 included in the invention.

From set (1a) an outgoing call is made (2) to set (1). Set (1) accepts the call if the telephone number of set (1a) has been preselected on set (1). If the telephone number of set (1a) has not been preselected on set (1), the call will not be accepted by set (1).

From set (1) an attempt is made to call sets (1a), (1b), (1c). Set 1 will make the calls (3) to sets (1a), (1b), because the numbers of sets (1a) and (1b) has been preselected on set (1).

## Claims

1. A software programme which defines three (3) applications (A-B-C) to be incorporated into a telephone set (of fixed or mobile telephony) so as to make it possible for new operations to be implemented for personalised use of these telephone sets.

2. A software programme which is incorporated into a telephone set of mobile or fixed telephony in accordance with Claim 1 which is also **characterised by** the fact that application A is used as follows:
A1. Makes it possible for the telephone set to select a telephone number, telephone numbers, a group of telephone numbers, or groups of telephone numbers, which the telephone set is to handle as described below:
A2. The set will receive incoming calls from the preselected telephone numbers.
A3. The set will not receive incoming calls from the preselected telephone numbers.
A4. Any attempt for an incoming call from any number that is not the same as the preselected ones will not be accepted.

3. A software programme which is incorporated into a telephone set of mobile or fixed telephony in accordance with Claims 1 and 2, which is also **characterised by** the fact that application B is used as follows:
B1. It makes it possible for a telephone set to determine the time interval (from-to) within which application A will be active.
B2. The time interval (from-to) which is to determine the duration of the operation of application A could be defined in all possible combinations of time intervals or/and repeated predetermined time intervals.

4. A software programme which is incorporated into a telephone set of mobile or fixed telephony in accordance with Claims 1, 2 and 3, which is also **characterised by** the fact that application C is used as follows:
C1. Makes it possible for any telephone set to select a telephone number,
telephone numbers, a group of telephone numbers, or groups of telephone numbers, which the telephone set may make outgoing calls to.
C2. Any attempt to make an outgoing call to a telephone number that is not the same as one of the preselected ones will be impossible.
C3. Access to application C for selecting telephone numbers will be possible only through the use of a secret code number or any other manner that will secure exclusive use of application C, banning any third party who does not know this secret code number or manner from using the application.
